# EUROPÄISCHE PATENTANMELDUNG

(11) **EP 4 841 236 A1**
(43) Veröffentlichungstag der Anmeldung: **18.11.2026**
(21) Anmeldenummer: 26179008.3
(22) Anmeldetag: 15.05.2026
(51) Int. Cl.: G01N 15/10, A01D 41/00

(54) **SENSORANORDNUNG UND VERFAHREN ZUM DETEKTIEREN UND ZÄHLEN VON TEILCHEN SOWIE SENSORELEMENT**

(30) Priorität: 15.05.2025 DE 102025118860
(71) Anmelder: ASG Luftfahrttechnik und Sensorik GmbH, 69469 Weinheim (DE)
(72) Erfinder: Göpfert, Marcus, 69483 Wald-Michelbach (DE)
(74) Vertreter: Stoffregen, Hans-Herbert

(57) **Zusammenfassung**

Die Erfindung betrifft eine Sensoranordnung (SA) zum Detektieren und Zählen fester Teilchen (T), wie Körner eines Erntegutstroms, umfassend ein Sensorelement (SE) mit einer Detektorschicht (DS) und einer Prallfläche (PF), wobei die Detektorschicht (DS) dazu eingerichtet ist, Teilchen (T), die auf die Prallfläche (PF) aufprallen, mittels eines Messsignals (MS) zu erfassen, und eine Auswerteeinheit (MCU), die dazu eingerichtet ist, die Anzahl der Teilchen (T) anhand des Messsignals (MS) zu bestimmen, wobei die Detektorschicht (DS) eine erste Elektrodenlage (EL1) und eine zweite Elektrodenlage (EL2) umfasst, die über eine kompressible Zwischenschicht (ZS) mechanisch fest miteinander verbunden sind, wobei die erste Elektrodenlage (EL1) eine federelastische geschlossene elektrisch leitfähige Schicht ist, wobei die zweite Elektrodenlage (EL2) eine Vielzahl erlektrisch voneinander isolierte Elektrodensegmente (ES1 ... ESn) aufweist, die unterhalb der ersten Elektrodenlage (EL1) angeordnet und elektrisch kapazitiv mit dieser gekoppelt sind und wobei jedes der Elektrodensegmente (ES1 ... ESn) einen Signalausgang (SA1 ... San) aufweist, an dem ein Ausganssignal (AS1 ... ASn) messbar ist.

## Beschreibung

Die Erfindung bezieht sich auf eine Sensoranordnung zum Detektieren und Zählen von Teilchen, wie Körner eines Erntestroms, nach dem Oberbegriff des Anspruchs 1 und ein Verfahren zum Detektieren und Zählen von Teilchen, wie Körner eines Erntestroms, nach dem Oberbegriff des Anspruchs 4.

Ferner bezieht sich die Erfindung auf ein Sensorelement zum Detektieren von Teilchen, wie Körner eines Erntestroms, nach dem Oberbegriff des Anspruchs 9.

Die EP 3 639 645 B1 betrifft einen Biomasse-Aufprallsensor. Zum Erfassen von Aufprallen von Biomasse-Material umfasst eine druckempfindliche Folie mit einer ersten Sensorfläche und einer zweiten, gegenüberliegenden Fläche, eine erste Schicht aus einer ersten Materialzusammensetzung, die direkt an die erste Sensorfläche angrenzt und eine erste Steifigkeit aufweist, sowie eine zweite Schicht aus einer zweiten Materialzusammensetzung, die direkt an die zweite, gegenüberliegende Fläche angrenzt. Die auf Stöße reagierende Schicht umfasst ein druckempfindliches Medium, das seine elektrischen Eigenschaften beim Aufprall eines Samens oder eines anderen Biomasse-Materials verändert. Die elektrischen Eigenschaften können eine Änderung des spezifischen Widerstands, eine Änderung der Kapazität oder eine durch den Aufprall des Biomasse-Materials verursachte Stromerzeugung umfassen. Diese elektrischen Eigenschaften ändern sich lokal in der auf Prall einwirkenden Schicht unmittelbar neben der Stelle des Aufpralls der Biomasse. Als typische druckempfindliche Medien sind beispielsweise elektromechanische Folien, zelluläre Polymere, Polymer-Elektrete, piezoelektrische Polymere, piezoelektrische Folien und quasipiezoelektrische Folien genannt. Die beschriebene druckempfindliche Folie ist in eine konforme Hülle eingearbeitet, und kommt somit nur indirekt mit dem Biomasse-Material in kontakt, wodurch die Sensitivität und Detektionsempfindlichkeit eingeschränkt ist.

Die EP 3 222 133 A1 betrifft ein Verfahren zum Erfassen einer Kornzahl eines Erntegutstromes, bei dem ein Sensor einer Messvorrichtung Körner, die auf eine Prallfläche des Sensors aufprallen, mittels eines Messsignals erfasst und eine Verarbeitungseinheit der Messvorrichtung dazu eingerichtet ist, die Kornzahl anhand des Messsignals zu bestimmen. Dabei werden die Anstiegsflanken des Messsignals erfasst, die ein Maß für die Kornzahl bilden.

Die US 2014/0 135 082 A1 betrifft ein System und ein Verfahren zur Bestimmung des Materialertrags und/oder -verlusts einer Erntemaschine unter Verwendung akustischer Sensoren und fortschrittlicher Signalverarbeitungsfunktionen. Das System besteht aus einem Sensorgehäuse mit einer Öffnung an einer Seite des Sensorgehäuses, einer Anschlagplatte, die so ausgelegt ist, dass sie in die Öffnung passt, und einem Elektronikmodul, das ein Mikrofon und einen Signalprozessor umfasst, die so ausgelegt sind, dass sie die Schallwellen erfassen, die entstehen, wenn Material auf die Anschlagplatte auftrifft, und diese in ein Audiosignal umwandeln, das die Menge an Material angibt, die zu einem bestimmten Zeitpunkt auf den Sensor auftrifft.

Die DE 10 2009 051 942 A1 betrifft eine Vorrichtung zum Erfassen von Masseteilchen in leitungsgeführten Luftströmen, insbesondere von auszubringendem Saatgut in Sämaschinen, mit einer Sensoreinheit, wobei die Sensoreinheit mindestens ein Sensorelement mit einem piezoelektrischen Element, mit einer Auftrefffläche für die Masseteilchen und mit einem auf einer der Auftrefffläche abgewandten Seite des piezoelektrischen Elementes angeordneten Dämpfungskörper aufweist, derart, dass beim Auftreffen der Masseteilchen auf die Auftrefffläche jeweils ein auswertbares Impulssignal erzeugt wird.

Der Anmelderin ist auch ein Verfahren zum Erfassen einer Kornzahl eines Erntestromes bekannt, bei dem ein Sensor einer Messvorrichtung Körner, die auf eine Prallfläche des Sensors aufprallen, mittels eines Messsignals erfasst und eine Verarbeitungseinheit dazu eingerichtet ist, die Kornzahl anhand des Messsignals zu bestimmen, wobei die Anstiegsflanken des Messsignals erfasst werden und ein Maß für die Kornzahl bilden. Der Sensor ist als Körperschallsensor ausgeführt, wobei die Prallfläche durch auftreffende Teilchen in eine Schwingung versetzt wird. Die Prallfläche kann aus einer oder mehreren planaren oder stabförmigen Flächen aufgebaut sein. An die Prallfläche ist ein Schallwandler gekoppelt, der die Schwingung in Form eines elektrischen Messsignals erfasst.

Der vorliegenden Erfindung liegt die Aufgabe zugrunde, ein Verfahren und eine Messvorrichtung sowie einen Sensor der eingangs genannten Art derart weiterzubilden, dass das erzeugte Messsignal dahingehend verbessert wird, dass unterschiedliche Typen von Teilchen charakteristische Signalformen erzeugen, die auf einfache Weise auswertbar sind, um diese bestimmten Teilchentypen zuordnen oder diese unterscheiden zu können.

Die Aufgabe wird im Wesentlichen durch eine Sensoranordnung zum Detektieren und Zählen fester Teilchen, wie Körner eines Erntegutstroms, mit den Merkmalen das Anspruchs 1 gelöst.

Die Sensoranordnung umfasst ein Sensorelement mit einer Detektorschicht und einer Prallfläche, wobei die Detektorschicht dazu eingerichtet ist, Teilchen, die auf die Prallfläche aufprallen, mittels eines Messsignals zu erfassen, und eine Auswerteeinheit, die dazu eingerichtet ist, die Anzahl der Teilchen anhand des Messsignals zu bestimmen, wobei die Detektorschicht eine erste Elektrodenlage und eine zweite Elektrodenlage umfasst, die über eine kompressible Zwischenschicht mechanisch fest miteinander verbunden sind, wobei die erste Elektrodenlage eine federelastische geschlossene elektrisch leitfähige Schicht ist, die die Prallfläche bildet und wobei die zweite Elektrodenlage eine Vielzahl elektrisch voneinander isolierte Elektrodensegmente aufweist, die unterhalb der ersten Elektrodenlage angeordnet und elektrisch kapazitiv mit dieser gekoppelt und mittels einer Ladespannung in Form einer Ladegleichspannung gegen die Prallfläche aufgeladen sind.

Gemäß der Erfindung ist vorgesehen, dass die Detektorschicht des Sensorelementes eine erste Elektrodenlage und eine zweite Elektrodenlage umfasst, die über eine kompressible Zwischenschicht mechanisch fest miteinander verbunden sind.

Die erste Elektrodenlage ist eine federelastische geschlossene elektrisch leitfähige Schicht mit einer äußeren Fläche, die die Prallfläche bildet. Die elektrisch leitfähige Schicht ist mit Bezugspotential, wie Massepotential, verbunden. Die federelastische geschlossene elektrisch leitfähige Schicht ist eine passive äußere Sensorschicht, die weder piezoelektrische oder sonstige elektrisch aktive Eigenschaften hat.

Die zweite Elektrodenlage weist eine Vielzahl elektrisch voneinander isolierte Elektrodensegmente auf, die unterhalb der ersten Elektrodenlage angeordnet und elektrisch kapazitiv mit der ersten Elektrodenlage gekoppelt sind. Die Elektrodensegmente sind mit einer Ladungsquelle verbunden und mittels dieser mit einer Ladespannung in Form einer Ladegleichspannung gegen die Prallfäche aufgeladen.

Die Elektrodensegmente sind eingerichtet, beim Aufprall eines Teilchens auf die Prallfläche durch lokale Verformung dieser in dem zumindest einen Elektrodensegment eine Ladungsverschiebung zu erzeugen, die ein oder mehrere das Messsignal erzeugende und/oder verändernde Impulse als Ausgangssignal erzeugt.

Die Auswerteeinheit ist eingerichtet, eine Impulsbreite und/oder eine Amplitude der Impulse in dem Messsignal zu bestimmen und in Abhängigkeit von der Impulsbreite und/oder der Amplitude einen Typ von Teilchen zahlenmäßig zu detektieren.

Die erfindungsgemäße Sensoranordnung zeichnet sich dadurch aus, dass beim Auftreffen eines Teilchens auf das Sensorelement der Detektorschicht in dem Sensorelement ein Impuls erzeugt wird, der bezogen auf seine Impulsbreite, Impulsdauer und/oder Amplitude eine dem Teilchentyp entsprechende charakteristische Impulsform aufweist.

Die Impulsbreite wird als die Dauer definiert, in der die Amplitude des Impulses oberhalb eines bestimmten Schwellenwerts bleibt. Die erfindungsgemäßen Sensorelemente zeichnen sich dadurch aus, dass ein auftreffendes Teilchen einen Impuls zeitlicher Auflösung erzeugt, der ein sicheres Detektieren eines Teilchens ermöglicht.

Die Impulsdauer umfasst die gesamte Zeit, über die der Impuls von Beginn bis zum Ende messbar ist, d.h. von der Zeit Null bis zur Abklingzeit.

Aus der Impulsbreite und/oder der Amplitude eines Impulses kann auf einen bestimmten Teilchentyp geschlossen werden, so dass in Abhängigkeit der Impulsbreite und/oder der Amplitude eines Impulses eine Unterscheidung bzw. Zuordnung des Teilchentyps zu einem Impuls möglich ist. Jedes Teilchen erzeugt genau einen charakteristischen Impuls, wobei jeder Teilchentyp in Abhängigkeit von seiner Beschaffenheit eine charakteristische Impulsform hat.

Die zweite Elektrodenlage weist eine Vielzahl elektrisch voneinander isolierter Elektrodensegmente auf, wobei jedes der Elektrodensegmente einen Signalausgang aufweist, an dem ein Ausgangssignal messbar ist.

Zur Verbesserung bzw. Einstellung eines Signal-/Rauschverhältnisses ist vorgesehen, dass jedes der Elektrodensegmente mit einer Ladungsquelle verbunden und mittels dieser mit der Ladespannung in Form einer Ladegleichspannung aufgeladen bzw. vorgespannt ist.

Die Signalausgänge der Elektrodensegmente sind ggf. über einen Signalvorverstärker mit einer Summationseinrichtung verbunden, welche eingerichtet ist, die einzelnen Ausgangssignale der Elektrodensegmente zeitlich zueinander zu synchronisieren und die synchronisierten Ausgangssignale durch Summieren zu dem Messsignal zusammenzufassen. Somit ist die Sensoranordnung in der Lage, einen Aufprall eines Teilchens, der in mehreren, insbesondere angrenzenden, Elektrodensegmenten Teilimpulse erzeugt, diese wieder exakt zeitsynchron zu einem Impuls zusammenzusetzen.

Durch die Segmentierung der zweiten Elektrodenlage und die Vorspannung der Elektrodensegmente wird die Sensitivität und Detektionsempfindlichkeit des Sensors verbessert. Insbesondere wird eine hochpräzise Impulsform in Amplitude und Zeit für jedes Teilchen erreicht.

Besonders bevorzugt ist sowohl die Impulsbreite als auch die Impulsdauer eines charakteristischen Impulses gegenüber von Impulsen bekannter PIEZO-Sensoren um den Faktor 100 verkürzt, wodurch sich die Zählrate signifikant erhöhen lässt.

Versuche haben ergeben, dass Körner mit gleicher Masse, z.B. gleichartige Raps-Körner, Impulse annähernd gleicher Impulsbreite erzeugen, die sich abhängig von der Fallhöhe in der Amplitudenhöhe unterscheiden.

Ferner konnte festgestellt werden, dass Körner mit unterschiedlicher Masse, z.B. Raps-Körner und Weizen-Körner, Impulse mit unterschiedlicher Impulsbreite erzeugen, die sich zudem abhängig von der Fallhöhe in der Amplitudenhöhe unterscheiden.

Daraus folgt: Je größer das Korn ist, bzw. je mehr Masse es besitzt, desto breiter ist der Impuls und je größer die Fallhöhe ist, desto größer ist die Amplitude.

Dadurch können Impulse von Teilchen mit unterschiedlicher Masse, wie z.B. kleinen Körnern, wie Raps, und großen Körnern, wie Weizen, durch ihre Impulsbreite und Impulse von Teilchen mit unterschiedlicher Fallhöhe durch ihre Amplitude unterschieden werden.

Die Segmentierung der unteren Elektrodenlage wird erfindungsgemäß dadurch ermöglicht, dass das Auftreffen von Teilchen zwischen zwei benachbarten Elektrodensegmenten im Messsignal mit den beim Auftreffen beteiligten Elektrodensegmenten zeitlich exakt synchronisiert wird.

Durch die Synchronisierung der Ausgangssignale der Elektrodensegmente wird des Weiteren sichergestellt, dass ein Auftreffen eines Teilchens zwischen zwei benachbarten Elektrodensegmenten von jedem Elektrodensegment anteilig in Bezug auf dessen Amplitude erfasst wird, und dass die Impulsanteile mittels der Summationseinrichtung im Messsignal zeitlich korrekt wieder summiert bzw. zusammengesetzt werden, um den ursprünglichen Impuls wieder zurückzugewinnen.

Ein Ausgang der Summationseinrichtung ist ggf. über einen Signalendverstärker mit einem Analogeingang der Auswerteeinheit, wie Mikrocontrollereinheit, verbunden, die ausgebildet ist, das analoge Messsignal zu digitalisieren und auszuwerten.

Aus Obigem ergibt sich, dass die Sensoranordnung so ausgelegt ist, dass jeder Teilchentyp, abhängig von seiner Beschaffenheit, eine bezogen auf Impulsbreite und/oder Amplitude charakteristische Impulsform erzeugt. Das Rohsignal eines Teilchens eines bestimmten Typs hat qualitativ immer die gleiche Form, insbesondere die gleiche Impulsbreite, und unterscheidet sich, abhängig von Fallhöhe und Winkel, nur durch die Amplitude des Impulses.

Die erfindungsgemäße Sensoranordnung eignet sich somit besonders zur Erkennung von Teilchen mit einem Durchmesser von ca. 1 mm bis 10 mm und einer Masse von ca. 1 mg bis 1000 mg. Die Bandbreite zur Mengenerkennung von Teilchen reicht von 1 Teilchen pro Stunde bzw. absolute Teilchenzahl bis zu, je nach Teilchentyp, 10 000 Teilchen pro Sekunde.

Die Bedingungen, unter denen die Teilchen auf die Detektorschicht auftreffen, wie z. B. Fallhöhe, Auftreffgeschwindigkeit, Winkel und/oder Temperatur, dürfen folglich in weiten Bereichen variieren, ohne dass dies Auswirkungen auf die Erkennung des Teilchentyps oder dessen Zählrate hat, da jedes Teilchen genau einen charakteristischen Impuls erzeugt.

Eine besondere Eigenschaft des Sensors, insbesondere mit Segmentierung, besteht in seiner hohen Sensitivität für sehr kleine Teilchen (d >= 1 mm) und einer kleinen Masse (m >= 1 mg), die auch noch aus niedriger Fallhöhe von wenigen cm erkannt werden können.

Die Messvorrichtung ist ausgebildet, jeweils charakteristische Impulsformen zu erkennen und bestimmten Teilchentypen zuzuordnen, bzw. diese zu unterscheiden. Dies kann auch zeitgleich innerhalb eines einzigen Teilchenstroms erfolgen. Damit könnten beispielsweise auch Mischungsverhältnisse von Teilchenmischungen bestimmt werden.

Gleichzeitig besteht eine hohe Unempfindlichkeit gegenüber störenden bzw. unerwünschten Einflüssen, wie z.B. Kratzen, Schaben, Vibrationen, Flüssigkeitstropfen, Klopfen, Fremdkörper, die sich im Körnerstrom befinden und sich in Form, Masse oder Dichte von den zu erkennenden Körnern unterscheiden, sowie auf den Sensor einwirkende allgemeine Störungen, die Impulsformen am Sensor erzeugen, welche sich von der gewünschten Impulsform in den charakteristischen Kenngrößen, wie Impulsbreite, Impulsamplitude und/oder Impulsdauer, signifikant unterscheiden und somit ausgeblendet werden können.

Weiterbildungen ergeben sich aus den Unteransprüchen.

Des Weiteren bezieht sich die Erfindung auf ein Verfahren zum Detektieren und Zählen fester Teilchen, wie Körner eines Erntegutstroms, wobei eine Detektorschicht eines Sensorelementes einer Sensoranordnung Teilchen, die auf eine Prallfläche der Detektorschicht aufprallen, mittels eines Messsignals erfasst und eine Auswerteeinheit der Sensoranordnung dazu eingerichtet ist, die Anzahl der Teilchen anhand des Messsignals zu bestimmen, wobei als Sensorelement ein solches verwendet wird, bei dem die Detektorschicht eine erste Elektrodenlage und eine zweite Elektrodenlage umfasst, die über eine kompressible Zwischenschicht mechanisch fest miteinander verbunden sind, wobei die erste Elektrodenlage eine federelastische geschlossene elektrisch leitfähige Schicht ist, die die Prallfläche bildet und wobei die zweite Elektrodenlage zumindest ein Elektrodensegment aufweist, das elektrisch kapazitiv mit der ersten Elektrodenlage gekoppelt und mittels einer Ladespannung in Form einer Ladegleichspannung gegen diese aufgeladen ist.

Weiterbildungen ergeben sich aus den Unteransprüchen.

Gegenstand der Erfindung ist auch ein Sensorelement zum Detektieren fester Teilchen, wie Körner eines Erntestroms, umfassend eine Detektorschicht mit einer Prallfläche, wobei die Detektorschicht dazu eingerichtet ist, Teilchen, die auf die Prallfläche des Sensors aufprallen, mittels eines Messsignals zu erfassen, wobei die Detektorschicht eine erste Elektrodenlage und eine zweite Elektrodenlage umfasst, die über eine kompressible Zwischenschicht mechanisch fest miteinander verbunden sind, wobei die erste Elektrodenlage eine federelastische geschlossene elektrisch leitfähige Schicht mit einer Fläche ist, die die Prallfläche bildet, und mit einem Grundpotential verbunden ist, und wobei die zweite Elektrodenlage eine Vielzahl elektrisch voneinander isolierte Elektrodensegmente aufweist, die elektrisch kapazitiv mit der ersten Elektrodenlage gekoppelt und mittels einer Ladespannung in Form einer Ladegleichspannung gegen diese aufladbar sind.

Vorzugsweise wird als Sensorelement ein solches verwendet, bei dem die Detektorschicht eine erste Elektrodenlage und eine zweite Elektrodenlage umfasst, die über eine kompressible Zwischenschicht mechanisch fest miteinander verbunden sind.

Dabei ist die erste Elektrodenlage eine federelastische geschlossene elektrisch leitfähige Schicht mit einer äußeren Fläche, die die Prallfläche bildet, wobei die erste Elektrodenlage mit Bezugspotential, wie Massepotential, verbunden ist.

Die zweite Elektrodenlage weist eine Vielzahl elektrisch voneinander isolierte Elektrodensegmente auf, die elektrisch kapazitiv mit der ersten Elektrodenlage gekoppelt und mittels einer Ladespannung in Form einer Ladegleichspannung gegen diese aufgeladen sind.

Gemäß der Erfindung wird auf zumindest einem der Elektrodensegmente beim Aufprall eines Teilchens auf die Prallfläche durch lokale Verformung an der Auftreffstelle dieser eine Ladungsverschiebung erzeugt, die ein oder mehrere das Messsignal erzeugende und/oder verändernde Impulse als Ausgangssignal erzeugen, insbesondere kurzzeitige Spannungseinbrüche.

Dabei ist vorgesehen, dass eine charakteristische Impulsbreite und/oder eine Amplitude der Impulse in dem Messsignal mittels der Auswerteeinheit bestimmt und in Abhängigkeit von der Impulsbreite und/oder der Amplitude ein Typ von Teilchen zahlenmäßig detektiert wird.

Die Teilchen werden beim Aufprall auf die Prallfläche von einer Vielzahl von einzelnen unterhalb der Prallfläche angeordneten, elektrisch voneinander isolierten Elektrodensegmenten erfasst, wobei jedes der beteiligten Elektrodensegmente ein Ausgangssignal liefert.

Dabei ist vorgesehen, dass beim Aufprall eines Teilchens auf die Prallfläche direkt über einem der Elektrodensegmente ein charakteristischer Impuls in dem Ausgangssignal des Elektrodensegmentes erzeugt wird und
dass beim Aufprall eines Teilchens zwischen angrenzenden Elektrodensegmenten in jedem angrenzenden Elektrodensegment ein bezogen auf seine Amplitude charakteristischer Impulsanteil erzeugt wird,
wobei die Ausgangssignale aller Elektrodensegmente ggf. verstärkt, zeitlich zueinander synchronisiert und mittels eines Summiergliedes zu dem Messsignal summiert werden, wobei die in angrenzenden Elektrodensegmenten durch ein Teilchen zeitgleich erzeugten charakteristischen Impulsanteile wieder zusammengesetzt werden.

Um eine möglichst gute Impulsausbeute (Sensitivität) zu erreichen, ist vorgesehen, dass der Betrag der Ladespannung, insbesondere Ladegleichspannung, eingestellt werden kann, denn je höher die Ladespannung auf den Elektrodensegmenten ist, desto größer ist der Betrag der kurzzeitigen Spannungsänderung beim Auftreffen eines Teilchens und trägt zum Erreichen einer höheren Sensitivität der Messanordnung bei.

Vorzugsweise wird das von dem Summierglied in Form eines Analogsignals bereitgestellte Messsignal mittels der Auswerteeinheit, wie Mikrocontrollereinheit, sowohl zeitlich als auch in der Amplitude in Echtzeit aufgelöst und verarbeitet, wobei vorzugsweise das Messsignal mit einer kontinuierlichen ADC-Samplerate von z.B. 1 MHz bei einer vertikalen Auflösung von z.B. 12 Bit abgetastet wird.

Besonders bevorzugt wird zur Detektion eines Typs von Teilchen eine Pulsbreitenmessung durchgeführt, wobei eine Zeitspanne ΔT zwischen dem Unterschreiten des Messsignals unter einen vorbestimmten ersten Spannungswert UTH1 und dem anschließenden Überschreiten eines vorbestimmten zweiten Spannungswertes UTH2 gemessen (mit UTH2 > UTH1) wird, wobei ein Impuls als Teilchen (T) gezählt wird, wenn die gemessene Zeitspanne ΔT einer definierten Impulsbreite, insbesondere im Bereich zwischen 5µs bis 100µs, entspricht, die für den gewünschten Typ von Teilchen definiert ist, beispielsweise 10µs für Rapskörner und 50µs für Weizenkörner.

Auch kann vorzugsweise zur Detektion der charakteristischen Teilchen ein lokales Minimum bzw. Maximum des Messsignals bestimmt werden, welches entsteht, wenn die Impulse von zwei oder mehreren Teilchen ineinanderlaufen, d.h. die Signalformen sich innerhalb einer Ereignisdauer zeitlich versetzt addieren.

Ferner betrifft die Erfindung ein Sensorelement zum Detektieren fester Teilchen, wie Körner eines Erntestroms, umfassend eine Detektorschicht mit einer Prallfläche, wobei die Detektorschicht dazu eingerichtet ist, Teilchen, die auf die Prallfläche des Sensors aufprallen, mittels eines Messsignals zu erfassen.

Gemäß der Erfindung ist vorgesehen, dass die Detektorschicht eine erste Elektrodenlage und eine zweite Elektrodenlage umfasst, die über eine kompressible Zwischenschicht mechanisch fest miteinander verbunden sind.

Des Weiteren ist die erste Elektrodenlage eine federelastische geschlossene elektrisch leitfähige Schicht mit einer äußeren Fläche, die die Prallfläche bildet, und die mit einem Grundpotential, wie Massepotential, verbunden ist.

Die zweite Elektrodenlage weist eine Vielzahl elektrisch voneinander isolierte Elektrodensegmente auf, die unterhalb der ersten Elektrodenlage angeordnet, elektrisch kapazitiv mit der ersten Elektrodenlage gekoppelt und mittels einer Ladespannung in Form einer Ladegleichspannung gegen diese aufladbar ist. Ein Elektrodensegment bildet somit mit der Prallfläche einen Kondensator, der durch die Ladegleichspannung elektrostatisch aufgeladen, d.h. polarisiert, wird. Beim Aufprall eines Teilchens auf die Prallfäche wird die Kapazität des Kondensators verändert, wodurch eine Ladungsverschiebung erzeugt wird, die als Impuls in dem Ausgangssignal des Kondensators messbar ist.

Gemäß einem Aspekt der Erfindung ist die Detektorschicht derart eingerichtet, dass beim Aufprall eines Teilchens auf die Prallfläche durch lokale Verformung dieser auf dem zumindest einen Elektrodensegment eine Ladungsverschiebung erzeugt wird, die ein oder mehrere das Messsignal erzeugende und/oder verändernde Impulse, insbesondere kurzzeitige Spannungseinbrüche, als Ausgangssignal erzeugt.

Die zweite Elektrodenlage weist eine Vielzahl elektrisch voneinander isolierter Elektrodensegmente auf, wobei jedes der Elektrodensegmente einen Signalausgang aufweist, an dem das Ausganssignal abgreifbar ist.

Vorzugsweise sind die einzelnen Elektrodensegmente über einen Widerstand, vorzugsweise hochohmigen Widerstand, mit einer Spannungsquelle verbunden und mittels dieser mit einer Ladespannung aufladbar.

Die Zwischenschicht ist vorzugsweise ein homogenes mit gasförmigen oder festen, mit Gas gefüllten Mikroelementen als Kompressibilitätskomponente durchsetztes Material, wie Klebstoff oder doppelseitiges kompressibles Klebeband, vorzugsweise auf der Basis von Polyurethan (PU), Polyurethan-Hartschaum (PUR), Polyethylen (PE) oder Silikon oder Bestandteilen zuvor genannter Materialien. Vorzugsweise ist die Zwischenschicht beidseitig mit den Elektrodenlagen vollflächig vernetzt.

Die Zwischenschicht kann eine Schichtdicke im Bereich 50 µm bis 400 µm aufweisen, die vorzugsweise im Bereich 50 µm bis 250 µm liegt. Ferner kann die Zwischenschicht eine Shore-Härte im Bereich von 15 bis 45 aufweisen, die vorzugsweise im Bereich von 20 bis 40 liegt. Ein Kompressionsmodul der Zwischenschicht sollte vorzugsweise kleiner als 2000 kPa sein.

Gemäß der Erfindung sind die Parameter der Zwischenschicht derart eingestellt, dass zwei essentielle Eigenschaften, nämlich einerseits eine zuverlässige und vollflächige Vernetzung, d.h. eine stabile mechanische Verbindung mit den Elektrodenlagen, und andererseits eine Kompressibilität trotz vollständiger beidseitiger Vernetzung mit den Elektrodenlagen und trotz geringer Schichtdicke, vorzugsweise im Bereich 50 µm bis 250 µm, gewährleistet ist.

Vorzugsweise sind die Elektrodensegmente in ihrer Geometrie, insbesondere in ihrer Form, Abmessung, wie Länge und Breite, sowie Parallelität, örtlich variabel ausgelegt.

Die Form, Länge, Breite und Parallelität der Segmente sind diejenigen Parameter, mit deren Hilfe die Prallfläche so eingestellt werden kann, dass deren Sensitivität örtlich nahezu homogen wird.

In Weiterbildung der Erfindung ist vorgesehen, dass dann, wenn Bereiche unterschiedlicher Sensitivität vorliegen sollten, dass die Segmentfläche in Bereichen geringer Sensitivität von vornherein kleiner ausgeführt ist als in den Bereichen normaler Sensitivität, wie z.B im Innern der Prallfläche.

Ebenso ist es möglich, annähernd beliebige Geometrien der Segmentfläche zu realisieren und somit die darunterliegenden Elektrodensegmente an diese Geometrien anzupassen.

Die erste Elektrodenlage kann ein E-Modul im Bereich 50 GPa bis 250 GPa aufweisen, das vorzugsweise im Bereich 70 GPa bis 210 GPa liegt, besonders vorzugsweise 200 GPa und/oder kann aus einem abriebfesten und/oder wasserdichten Material, wie Edelstahl, Aluminium, Kupfer oder Messing, ausgebildet sein und/oder kann eine Dicke D in einem Bereich von 50 bis 250 µm aufweisen, die vorzugsweise in einem Bereich von 100 bis 200 µm liegt. Die äußere Fläche der ersten Elektrodenlage, die die Prallfläche bildet, ist vorzugsweise unbehandelt, kann aber auch eine Schutzbeschichtung aufweisen, ohne die Funktion zu beeinträchtigen.

Da sich die Elektrodenlage nur elastisch verformen soll, ist zudem eine gewisse Streckgrenze von z.B. >120 MPa erforderlich.

Zur Optimierung der Impulsform und Erhöhung der Sensitivität kann unterhalb der zweiten Elektrodenlage eine Dämpfungsschicht aus einem zähplastischen massereichen Material, wie Dämpfungselemente aus dem Karosseriebau oder Karosseriedichtmasse, angeordnet, wie verklebt sein. Die Dämpfungsschicht kann eine Dicke aufweisen, die vorzugsweise im Bereich >1mm liegt.

Besonders bevorzugt kann die Größe der Fläche der Detektionsschicht frei skaliert werden. Auch ist die Form der Detektionsflächen, d. h. deren Geometrie, frei gestaltbar.

Weiterbildungen ergeben sich aus den Unteransprüchen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Figuren zu entnehmenden bevorzugten Ausführungsbeispielen.

Es zeigen:
- Fig. 1: eine schematische Darstellung des Sensorelementes im Schnitt,
- Fig. 2a: eine Draufsicht auf ein Ausführungsbeispiel einer zweiten Elektrodenlage mit einzelnen Elektrodensegmenten,
- Fig. 2b: eine Unteransicht der zweiten Elektrodenlage,
- Fig. 2c: eine Einzelheit der Elektrodensegmente,
- Fig. 3: eine Sensoranordnung mit Sensorelement und Verarbeitungseinheit,
- Fig. 4: eine Darstellung von Impulsformen von Teilchen mit gleicher Masse aus unterschiedlichen Fallhöhen,
- Fig. 5: eine Darstellung von Impulsformen von Teilchen mit unterschiedlicher Masse aus gleicher Fallhöhe und
- Fig. 6: ein Ausgangssignal der Sensoranordnung mit charakteristischem Impuls.

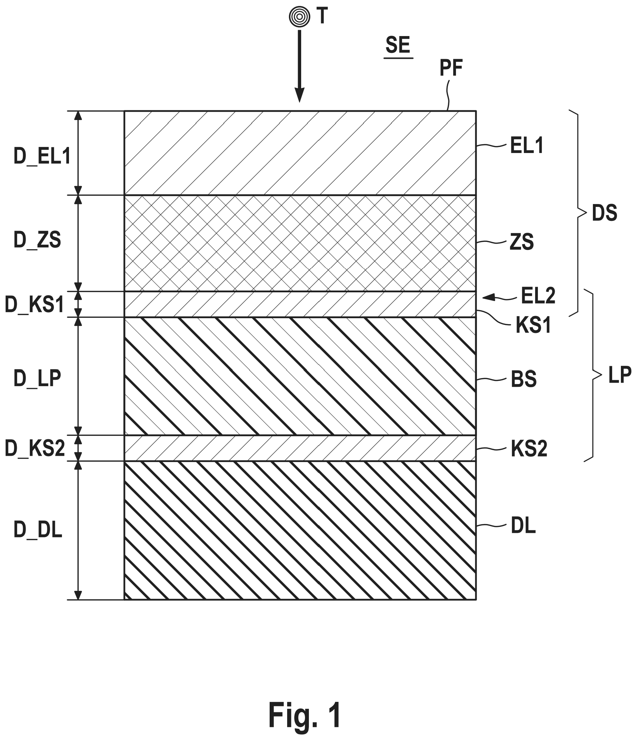

Fig. 1 zeigt eine schematische Darstellung eines Sensorelementes SE im Schnitt. Das Sensorelement SE umfasst eine kapazitive Detektorschicht DS mit einer ersten elektrisch leitfähigen Elektrodenlage EL1 und einer zweiten elektrisch leitfähigen Elektrodenlage EL2.

Die erste Elektrodenlage EL1 ist eine obere Elektrodenlage EL1 in Form einer einzigen geschlossenen elektrisch leitfähigen Elektrode, deren Oberfläche eine Prall- bzw. Rieselfläche PF für Teilchen T, wie Körner eines Erntestroms einer Erntemaschine, bildet, die detektiert und gezählt werden sollen. Die obere Elektrodenlage EL1 ist federelastisch ausgebildet, wobei Material und Dicke der oberen Elektrodenlage EL1 derart angepasst sind, dass ein Auftreffen eines Teilchens T eine kurzzeitige Verformung der oberen Elektrodenlage EL1 an der Auftreffstelle bewirkt. Die obere Elektrodenlage EL1 weist ein E-Modul E auf, das vorzugsweise im Bereich 200 GPa liegt. Die Dicke D_EL1 der oberen Elektrodenlage EL1 kann je nach Anwendungsfall im Bereich von ca. 50 µm bis 250 µm liegen.

Die obere Elektrodenlage EL1 ist vorzugsweise aus einem abriebfesten und wasserdichten Material, wie Edelstahl, Aluminium, Kupfer oder Messing, ausgebildet, da diese in direktem Kontakt mit den zu messenden Teilchen T und der Umgebung ist.

Ferner besitzt die obere Elektrodenlage EL1 aufgrund der Verbindung mit einem Bezugspotenzial neben einer Funktion als Prall- bzw. Rieselfläche PF zusätzlich eine abschirmende Wirkung für die innenliegenden Elektrodensegmente gegenüber elektromagnetischer Störfelder.

Die zweite Elektrodenlage EL2 kann auch als eine untere Elektrodenlage EL2 bezeichnet werden, die vorzugsweise als Teil einer handelsüblichen Leiterplatte LP ausgebildet ist. Die Leiterplatte LP besteht aus einem elektrisch isolierenden Basismaterial BS, mit einer Dicke D_BS von ca. 1,55 mm, das auf seiner Ober- und Unterseite je eine elektrisch leitfähige Schicht KS1, KS2, wie Kupferschicht, mit je einer Schichtdicke D_KS1, D_KS2 von ca. 34 µm aufweist.

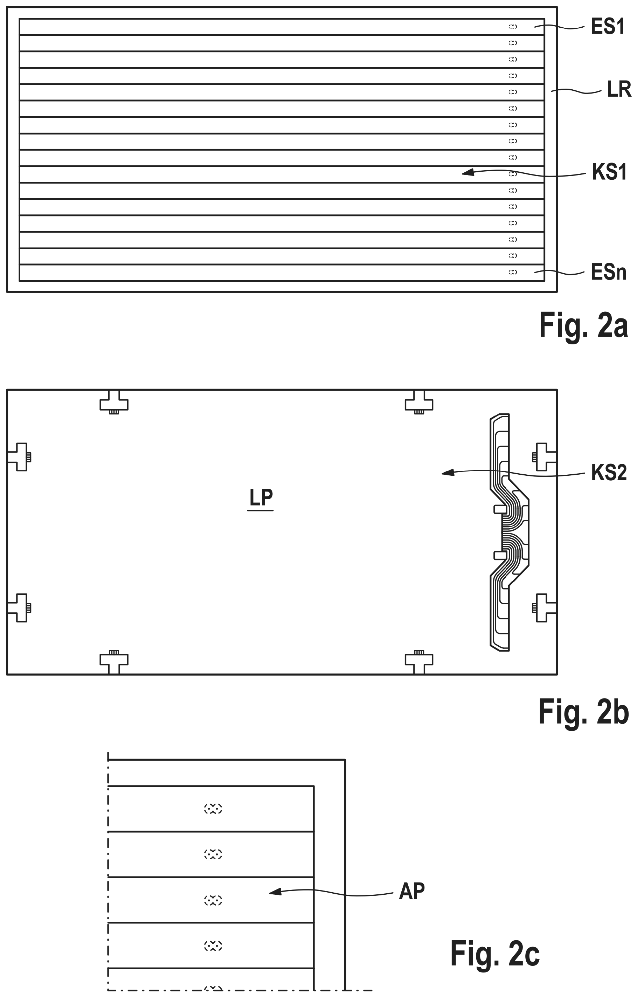

Fig. 2a zeigt die Leiterplatte LP in einer Draufsicht, wobei die die Elektrodensegmente ES1 ... ESn in Form von einzelnen elektrisch voneinander isolierten leitfähigen streifenförmigen Flächen in der leitfähigen Schicht KS1 ausgebildet sind. Die Elektrodensegmente ES1 ... ESn sind von einem umlaufenden elektrisch leitfähigen Rand LR zur Abschirmung umrandet, der mittels Durchkontaktierungen ebenfalls mit Bezugspotenzial verbunden ist.

Fig. 2b zeigt eine Unterseite der Leiterplatte LP, wobei die elektrisch leitfähige Schicht KS2 bis auf Aussparungen zur Kontaktierung der Elektrodensegmente ES1 ... ESn geschlossen ausgebildet ist. Die elektrisch leitfähige Schicht KS2 kann zur Abschirmung der Elektrodensegmente ES1 ... ESn mit Grundpotential verbunden sein.

Fig. 2c zeigt als Einzelheit ein Anschlussbeispiel AP1 ... APn eines Elektrodensegmentes ES1 ... ESn zum Anschluss einer Signalleitung SL1 ... SLn.

Die untere Elektrodenlage EL2 umfasst mehrere einzelne elektrisch voneinander isolierte leitfähige Elektrodensegmente ES1 ... ESn. Jedes Elektrodensegment ES1 ... ESn der unteren Elektrodenlage EL2 ist elektrisch kapazitiv mit der oberen Elektrodenlage EL1 gekoppelt und kann auch als Kanal CH1 ... CHn bezeichnet werden.

Die Anzahl und Geometrie der Elektrodensegmente ES1 ... ESn kann abhängig von der jeweiligen Applikation variieren. Die einzelnen Elektrodensegmente ES1 ... ESn sind voneinander elektrisch isoliert. Je nach Anzahl und Geometrie der einzelnen Elektrodensegmente ES1 ... ESn kann, abhängig von der Anforderung, die Sensitivität für jedes Elektrodensegment ES1 ... ESn variabel und somit bewusst voneinander verschieden oder auch gezielt aufeinander abgestimmt gestaltet, d.h. per Design von Anzahl und Geometrie, insbesondere Form, Länge, Breite und Parallelität, eingestellt werden.

Gemäß Fig. 1 sind die erste und die zweite Elektrodenlage EL1, EL2 durch eine dünne Zwischenschicht ZS mechanisch fest miteinander verbunden, wie verklebt. Die dünne Zwischenschicht ZS zwischen den beiden Elektrodenlagen EL1, EL2 ist für die Gesamtfunktionalität des Sensorelementes SE von besonderer Bedeutung.

Die Zwischenschicht ZS besteht aus einem homogen mit gasförmigen oder festen, mit Gas gefüllten Mikroelementen als Kompressibilitätskomponente durchsetzten Material, wie Klebstoff, vorzugsweise auf Basis von Polyurethan (PU), Polyurethan-Schaumstoff (PUR) oder Silikon oder Bestandteilen zuvor genannter Materialien, das im Wesentlichen zwei Eigenschaften erfüllen muss. Die beiden essentiellen Eigenschaften bestehen einerseits in einer zuverlässigen und vollflächigen Vernetzung, d.h. einer stabilen mechanischen Verbindung mit den Elektrodenlagen EL1, EL2 und andererseits in einer Kompressibilität trotz vollständiger beidseitiger Vernetzung mit den Elektrodenlagen EL1, EL2 und trotz geringer Schichtdicke D_ZS.

Die Schichtdicke D_ZS kann je nach gewünschten Eigenschaften frei gewählt werden und liegt vorzugsweise im Bereich D_ZS = 50 µm bis D_ZS = 250 µm, vorzugsweise D_ZS = 100 µm. Die Zwischenschicht hat ein Kompressionsmodul K_ZS, welches vorzugsweise im Bereich < 2000 kPa liegt.

Zusätzlich zu den funktional essentiellen o. g. Eigenschaften besteht eine weitere essentielle Eigenschaft darin, das Eindringen von Fremdstoffen in die Zwischenschicht ZS bzw. die Unterwanderung der Zwischenschicht ZS von Fremdstoffen, wie z.B. Feuchtigkeit, wirksam und dauerhaft zu verhindern und gleichzeitig die beiden Elektrodenlagen EL1, EL2 zuverlässig elektrisch voneinander zu isolieren und somit dauerhaft konstante, zeitlich reproduzierbare Verhältnisse zu gewährleisten.

Aus Obigem ergibt sich, dass die obere Elektrodenlage EL1, die Zwischenschicht ZS und die Elektrodensegmente ES1 ... ESn der unteren Elektrodenlage EL2 ein kapazitives Sensorsystem bilden. Durch Auftreffen eines Teilchens T auf die obere Elektrodenlage EL1 wird diese am Auftreffpunkt kurzzeitig elastisch verformt oder verschoben, wodurch sich ein Abstand zu dem oder den darunter angeordneten Elektrodensegment(en) ändert, wodurch eine elektrisch messbare Ladungsverschiebung erzeugt wird. Auf der Basis der Veränderung der elektrischen Ladung durch Auftreffen eines Teilchens T auf die obere Elektrodenlage EL1 wird ein für den Typ des Teilchens T charakteristischer Impuls in einem Ausgangssignal des Elektrodensegmentes ES1 ... ESn erzeugt.

Unterhalb der zweiten Elektrodenlage EL2 ist zusätzlich eine Dämpfungslage DL angeordnet. Die Dämpfungslage DL umfasst ein zähplastisches massereiches bzw. dichtes Material optimierter Dicke D_DL, vorzugsweise D_DL ≥ 1 mm, besonders bevorzugt D_DL = 2 mm und dient zur Optimierung der Impulsform und zur Erhöhung der Sensitivität.

Durch die Anbringung einer Dämpfungslage DL unterhalb der Elektroden-Detektionsflächenanordnung wird durch die zusätzliche Masse und somit auch deren Massenträgheit der durch ein auf die Detektionsfläche der oberen Elektrodenlage EL1 auftreffendes Teilchen T entstehende Impuls verstärkt und damit die Signalamplitude des betroffenen Elektrodensegments ES1 ... ESn erhöht. Gleichzeitig wird eine höherfrequente Nachschwingneigung nach dem Auftreffen eines Teilchens T dahingehend stark gedämpft, dass die für die Schwingneigung verantwortliche restliche Energie wirksam absorbiert wird, was schließlich einen qualitativ höherwertigen und kürzeren Impuls zur Folge hat, was ausdrücklich gewünscht ist.

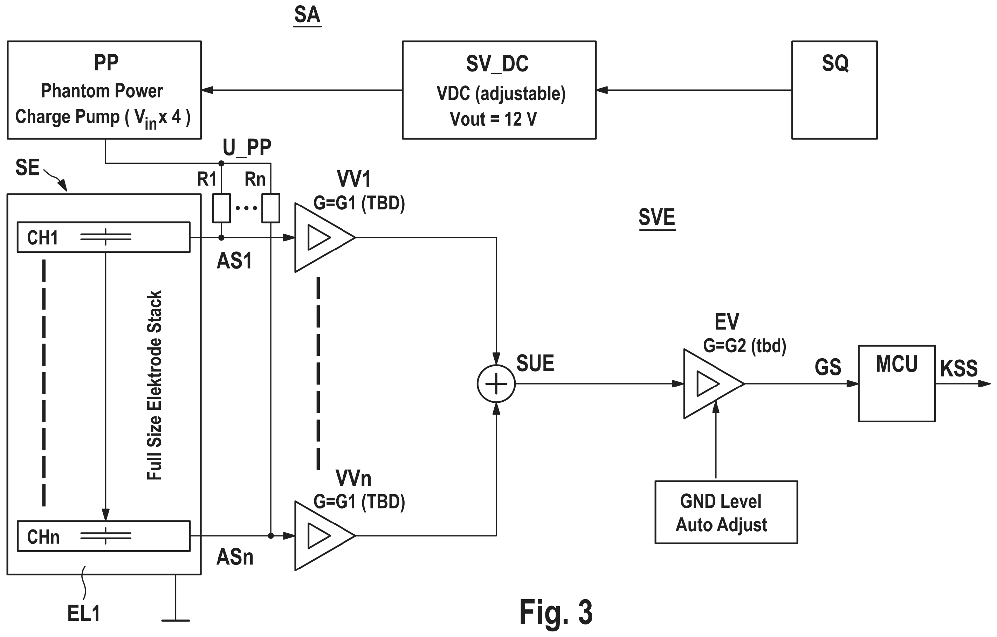

Fig. 3 zeigt schematisch eine Messanordnung MA zum Detektieren und Zählen einzelner oder mehrerer fester Teilchen T unterschiedlicher Größe. Die Messanordnung MA umfasst eine Spannungsquelle SQ, eine einstellbare Gleichspannungsversorgung SV_DC, eine Phantomspeisung PP, das Sensorelement SE und eine Signalverarbeitungseinheit SVE mit Signalvorverstärkern SV1 ... SVn zur Vorverarbeitung der einzelnen Ausgangssignale AS1 ... ASn, ein Summationsknoten SK zur Bündelung bzw. Addition der einzelnen Ausgangssignale AS1 ... ASn, einen Signalendverstärker SEV und eine Auswerteeinheit MCU, wie Mikrocontroller.

Jedes Elektrodensegment ES1 ... ESn der unteren Elektrodenlage EL2, auch als Kanal CH1 ... CHn bezeichnet, besitzt einen Signalausgang SA1 ... SAn, der jeweils mit einem eigenen Signalvorverstärker SV1 ... SVn verbunden ist. Ferner ist jedes Elektrodensegment ES1 ... ESn über einen hochohmigen Widerstand R1 ... Rn mit einer Ladegleichspannung L_DC, z.B. U_PP = 48 V der Phantomspeisung PP verbunden, so dass jedes Elektrodensegment ES1 ... ESn gegenüber der ersten Elektrodenlage EL1, die mit Grundpotential verbunden ist, vorgespannt ist.

Die Ausgänge aller einzelnen Signalvorverstärker SV1 ... SVn werden in dem Summationsknoten SK zeitlich synchronisiert, zusammengefasst, wie gebündelt, und in dem Signalendverstärker SEV elektronisch nachverarbeitet. Anschließend wird das analoge Gesamtsignal GS von einem nachgeschalteten Mikrocontroller MCU digitalisiert, ausgewertet und ausgegeben.

Der Mikrocontroller MCU realisiert und ermittelt aus den charakteristischen Eigenschaften des vorverarbeiteten und von dem Summationsknoten SK zur Verfügung gestellten analogen Gesamtsignals GS mittels Auswertealgorithmen die gewünschten Informationen und gibt diese über eine Schnittstelle an eine Kommunikationsgegenstelle KSS oder einen Bus aus. Die Kommunikationsschnittstelle KSS ist je nach Anwendung frei wählbar und ist nur durch die Wahl der Umgebung der Mikrocontrollereinheit MCU limitiert.

Die Messanordnung MA arbeitet wie folgt. Jedes Elektrodensegment ES1 ... ESn liefert ein Ausgangssignal AS1 ... ASn, wenn ein Teilchen T auf den Bereich der Detektions- bzw. Prallfläche PF auftrifft, die sich genau über dem betreffenden Elektrodensegment ES1 ... ESn befindet. Das Auftreffen eines Teilchens T bewirkt eine Ladungsverschiebung auf dem betreffenden Elektrodensegment ES1 ... ESn, wodurch ein kurzer negativer Impuls in dem Ausgangssignal entsteht.

Hierfür sind die Elektrodensegmente ES1 ... ESn zuvor mit der Ladegleichspannung L_DC aufgeladen, d.h. vorgespannt. Durch das Auftreffen eines Teilchens T im Bereich des betreffenden Elektrodensegments verringert sich der Abstand um den Auftreffpunkt des Teilchens T herum geringfügig, wodurch sich die Ladungskapazität dieser Elektrodensegmentanordnung geringfügig vergrößert. Dies führt zu einem kurzzeitigen, minimalen Spannungseinbruch. Um diesen Effekt sinnvoll nutzen zu können, muss diese kleine Spannung jeweils mittels Vorverstärker SV1 ... SVn verstärkt werden.

Der Zusammenhang zwischen der Fläche des Elektrodensegments ES1 ... ESn und dem Bereich der Fläche auf der Detektions- bzw. Prallfläche PF, bei der durch das Auftreffen eines Teilchens T eine geringförmige kurzzeitige Verformung stattfindet, ist umgekehrt proportional, d.h. je kleiner die Fläche eines Elektrodensegments ES1 ... ESn ist, desto größer ist im Verhältnis der Einfluss der Ladungsverschiebung und somit die Amplitude am Ausgang des Vorverstärkers SV1 ... SVn.

Das Prinzip der Segmentierung der unteren Elektrodenlage EL2 kann jedoch nur angewendet werden, wenn zwei wichtige Voraussetzungen erfüllt sind:
1. Voraussetzung: Das Auftreffen von Teilchen T auf verschiedenen Elektrodensegmenten ES1 ... ESn muss im Gesamtsignal GS mit allen anderen Elektrodensegmenten zeitlich exakt synchronisiert sein. Diese zeitlich exakte Synchronität ist zwingende Voraussetzung für die
2. Voraussetzung: Den Fall des Auftreffens eines Teilchens T zwischen zwei benachbarten Elektrodensegmenten, um von jedem Elektrodensegment anteilig in Bezug auf dessen Amplitude erfasst und im Gesamtsignal GS zeitlich korrekt wieder zusammengesetzt werden zu können, um den ursprünglichen Impuls wieder zurückzugewinnen.

Hierfür ist der Summationsknoten SK zuständig, in den alle Ausgänge der Vorverstärker SV1 ... SVn einfließen und zu dem einzigen Gesamtsignal GS zusammengesetzt werden. In dem Endverstärker SEV wird das resultierende Gesamtsignal GS nochmals verstärkt und auf die für die Signalauswertung in der Recheneinheit MCU optimale Amplitude angepasst.

Für eine möglichst gute Signalausbeute, d.h. Sensitivität, ist der Betrag der Ladegleichspannung L_DC von besonderer Bedeutung. Je höher die Ladegleichspannung L_DC auf den Elektrodensegmenten ES1 ... ESn, desto größer ist der Betrag der kurzzeitigen Spannungsänderung beim Auftreffen eines Teilchens T und trägt zum Erreichen einer höheren Sensitivität des Gesamtsystems bei. Durch die höhere Sensitivität kann der Betrag der Verstärkung zurückgenommen werden, wodurch bei letztlich gleicher Amplitude ein günstigerer Signal-Rauschabstand entsteht.

Die Mikrocontrollereinheit MCU erhält die vom Summationsknoten SK bereitgestellte Information in Form des analogen Gesamtsignals GS. Eine der wichtigsten Anforderungen an die Mikrocontrollereinheit MCU besteht darin, die Impulse in dem Analogsignal sowohl zeitlich als auch in der Amplitude hinreichend hoch und in Echtzeit auflösen und verarbeiten zu können, damit keine relevanten Informationen verloren gehen.

Eine kontinuierliche Abtastrate eines Analog-Digital-Umsetzers (ADC-Samplerate) von z.B. 1 MHz bei einer vertikalen Auflösung von z.B. 12 Bit wird für die oben genannten Bedingungen als ausreichend angesehen. Die Rechenleistung der Mikrocontrollereinheit MCU ist angepasst, um die benötigten Auswertealgorithmen durchführen und am Ausgang des Sensors bereitstellen zu können.

Der Auswertealgorithmus umfasst auszuführende wiederkehrende Rechenoperationen, die erforderlich sind, um aus dem Analogsignal qualitativ und quantitativ das Ereignis auftreffender Teilchen T auf der Detektions- bzw. Prallfläche PF zu erkennen, diese Ereignisse absolut oder pro Zeiteinheit aufzusummieren und gleichzeitig Signalereignisse, die anderen Ursprungs sind, wirksam zu ignorieren bzw. auszublenden. Je nach verwendeter Mikrocontrollereinheit MCU und Leistungsfähigkeit kann der Komplexitätsgrad des Algorithmus variieren.

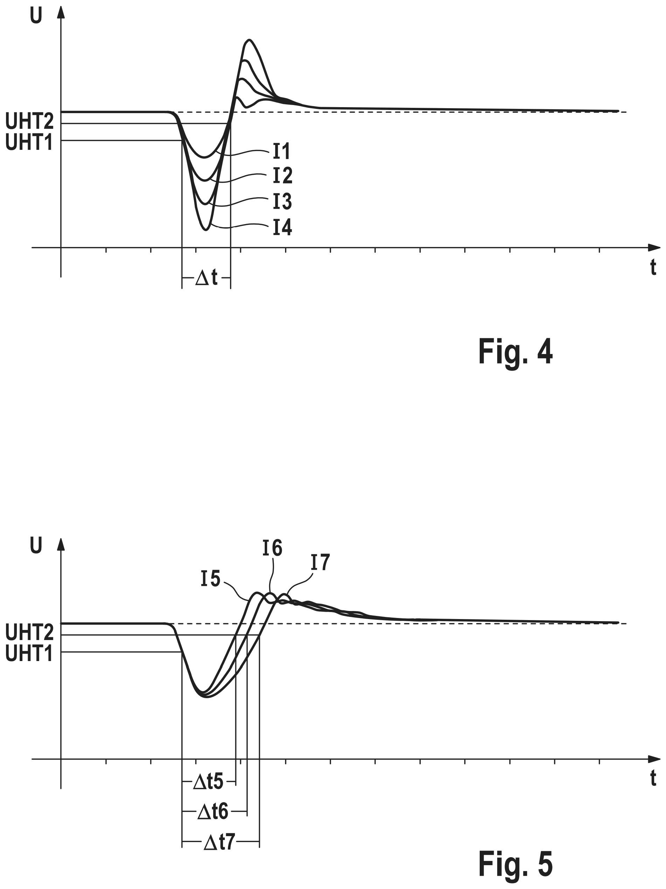

Fig. 4 zeigt Impulse I1 bis I4 einer Versuchsreihe, wobei ein und dasselbe Teilchen aus verschiedenen Fallhöhen von 5 cm bis 60 cm auf die Prallfläche PF auftreffen. Die Versuchsreihe zeigt, dass sich die Impulse I1 bis I4 nur in Ihrer Amplitude unterscheiden, während die Impulsbreite Δt der einzelnen Impulse I1 bis I4 nahezu identisch ist.

Fig. 5 zeigt Impulse I5 bis I7 einer Versuchsreihe, wobei Teilchen verschiedener Masse aus der gleichen Fallhöhe auf die Prallfläche PF auftreffen. Die Versuchsreihe zeigt, dass sich die Impulse I5 bis I7 nur in ihrer Impulsbreite Δt5 bis Δt7 unterscheiden, während die Amplitude bei gleicher Fallhöhe und unterschiedlicher Masse nahezu identisch ist.

Aus Obigem ergibt sich, dass die Amplitude eines Impulses proportional zu der Fallhöhe eines Teilchens ist und dass die Impulsbreite eines Impulses proportional zu der Masse und somit proportional zu einer Kornart bzw. einem Teilchentyp ist. Ferner konnte festgestellt werden, dass die Impulsbreite unabhängig von der Fallhöhe ist. Daraus ergibt sich, dass bei gleicher Fallhöhe unterschiedliche Teilchentypen allein aus der Impulsbreite bestimmt werden können.

Die Versuche zeigen weiter, dass die für Teilchen, wie Weizenkörner oder Rapskörner, mit dem erfindungsgemäßen Sensorelement gemessenen Impulsformen im Vergleich zu Impulsformen von Piezo-Sensoren sowohl eine kürzere Impulsbreite als auch eine kürzere Impulsdauer, d.h. weniger Überschwingungen aufweisen. So erzeugen Weizenkörner mit einer Masse von ca. 45 mg beim Aufprall auf einen Piezo-Sensor Impulse mit einer Impulsbreite von 5ms bis 10ms, während die gleichen Weizenkörner beim Aufprall auf das erfindungsgemäße Sensorelement Impulse mit einer Impulsbreite im Bereich von 40 µs bis 60 µs, insbesondere ca. 50 µs erzeugen. Rapskörner mit einer Masse von ca. 1 mg erzeugen Impulse mit einer Impulsbreite im Bereich von 5 µs bis 15 µs, insbesondere ca. 10 µs.

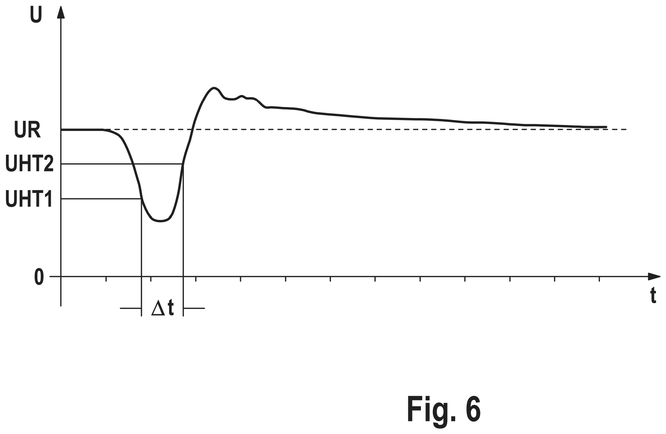

Fig. 6 zeigt einen bevorzugten Auswertealgorithmus in Form einer Pulsbreitenmessung. Dabei ist vorgesehen, dass ein analoges Ruhesignal des Sensors den DC-Pegel Vcc/2 besitzt.

Beim Auftreffen eines Teilchens T entsteht ein kurzer negativer Impuls mit charakteristischer Signalform. Da sich die Signalform eines gleichen Teilchentyps nur durch die Amplitude unterscheidet, kann die Pulsbreitenmessung als einfachste Form der Detektion verwendet werden.

Dabei wird eine Zeitspanne Δt zwischen dem Unterschreiten des Analogsignals unter einen bestimmten ersten Spannungswert UTH1 und dem anschließenden Überschreiten eines zweiten Spannungswertes UTH2 gemessen (mit UTH2 > UTH1), wobei UTH2-UTH1 die Hysterese darstellt, mit der die Robustheit der Ereigniserkennung auf das für die Anwendung gewünschte Maß eingestellt werden kann. Für die Pulsbreite wird ein für den gewünschten Teilchentyp charakteristisches Intervall definiert.

Bei einer erweiterten Form der Signalerkennung besteht zusätzlich zu dem Grundalgorithmus in Form der Pulsweitenmessung die Option, Signalformen, die durch die Wechselwirkung mehrerer Teilchen T entstehen, durch zusätzliche Signalmerkmale zu erkennen und voneinander zu unterscheiden.

Ein wichtiges Merkmal ist die Erkennung eines lokalen Minimums, welches entsteht, wenn zwei oder mehrere Teilchen T ineinanderlaufen, d.h. die Signalformen sich innerhalb einer Ereignisdauer zeitlich versetzt addieren. Dies zu erkennen, bedeutet einen deutlich erhöhten Rechenaufwand und ist nicht in jeder Anwendung zwingend erforderlich. Durch die Bestimmung des Verhältnisses von Amplitude und Signalbreite kann eine Unterscheidung erfolgen, ob zwei Teilchen exakt zur gleichen Zeit aufgetroffen sind oder es sich nur um ein einzelnes Teilchen T mit doppeltem Impuls handelt.

Zusätzlich wird gemäß der Erfindung ein Effekt berücksichtigt, der insbesondere dann auftritt, wenn entweder die Anzahl auftreffender Teilchen T pro Zeiteinheit zu groß wird oder die Flächen, auf der die Teilchen T auftreffen, so ungleich verteilt sind, dass zu viele Teilchen T auf einen zu kleinen Bereich der Detektions- bzw. Prallfläche PF auftreffen oder die Kombination aus beiden Effekten eintritt.

In allen Fällen führt dies dazu, dass sich Teilchen T im Teilchenstrom gegenseitig beeinflussen, beispielsweise in der Form, dass Teilchen entweder gar nicht mehr auf der Detektionsfläche DF ankommen und zuvor am Sensor SE vorbeigelenkt werden oder in ihrer kinetischen Energie so sehr verändert werden, dass sie die charakteristischen Eigenschaften beim Auftreffen auf die Detektionsfläche DF nicht mehr besitzen. Auch kann der Fall eintreten, dass Teilchen aufgrund der gegenseitigen Beeinflussung mehrmals auf der Detektionsfläche DF auftreffen und mehrfach registriert werden.

Eine für diesen Fall abweichende bzw. unkorrekte Erkennungsrate liegt nicht in einem vermeintlich fehlerhaft arbeitenden Sensor begründet, sondern daran, dass die Voraussetzungen für eine korrekte Arbeitsweise tatsächlich nicht mehr vorliegen und der Sensor lediglich die tatsächlich auf der Detektions- bzw. Prallfläche PF auftretenden Ereignisse zählt. Für diesen speziellen Fall wird das abweichende Ergebnis applikationsabhängig mit statistischen Methoden korrigiert.

Im Falle eines massiven Teilchenaufkommens, bei dem sich die Teilchen T dahingehend in der Form beeinflussen, dass die gemessene Teilchenmenge mit der tatsächlichen Menge nicht mehr übereinstimmt, wird der prozentuale Fehler mittels Korrekturfaktor ausgeglichen. Der Korrekturfaktor ermöglicht, innerhalb einer konkreten Anwendung die Abweichungen vom tatsächlichen Ist-Zustand auszugleichen. Der Korrekturfaktor wird durch geeignete Messungen vorab ermittelt und anschließend als Systemparameter beim Einrichten bzw. Kalibrieren des Systems konfiguriert.

Das erfindungsgemäße Sensorelement dient zur Erkennung bzw. Detektion einzelner oder mehrerer fester Teilchen einer bestimmten Beschaffenheit, die vereinzelt oder in schneller zeitlicher Abfolge auf eine spezielle Detektoroberfläche auftreffen, deren aufbereitetes Ausgangssignal eine quantitative Bestimmung der auf die Detektoroberfläche aufgetroffenen Teilchen durch das Sensorelement, inkrementell aufsummierend und/oder Anzahl pro Zeiteinheit, ermöglicht. Gleichzeitig werden unerwünschte (störende) Teilchen oder Partikel anderer Form und Eigenschaft, die zeitgleich mit den gewünschten Teilchen ebenfalls auf der Detektoroberfläche auftreffen bzw. unerwünschte (störende) auf die Sensoranordnung einwirkende Effekte, bewusst nicht erfasst und gezählt.

## Patentansprüche

1. Sensoranordnung (SA) zum Detektieren und Zählen fester Teilchen (T), wie Körner eines Erntegutstroms, umfassend ein Sensorelement (SE) mit einer Detektorschicht (DS) und einer Prallfläche (PF), wobei die Detektorschicht (DS) dazu eingerichtet ist, Teilchen (T), die auf die Prallfläche (PF) aufprallen, mittels eines Messsignals (MS) zu erfassen, und eine Auswerteeinheit (MCU), die dazu eingerichtet ist, die Anzahl der Teilchen (T) anhand des Messsignals (MS) zu bestimmen,
wobei die Detektorschicht (DS) eine erste Elektrodenlage (EL1) und eine zweite Elektrodenlage (EL2) umfasst, die über eine kompressible Zwischenschicht (ZS) mechanisch fest miteinander verbunden sind, wobei die erste Elektrodenlage (EL1) eine federelastische geschlossene elektrisch leitfähige Schicht ist, wobei die zweite Elektrodenlage (EL2) eine Vielzahl erlektrisch voneinander isolierte Elektrodensegmente (ES1 ... ESn) aufweist, die unterhalb der ersten Elektrodenlage (EL1) angeordnet und elektrisch kapazitiv mit dieser gekoppelt sind, und wobei jedes der Elektrodensegmente (ES1 ... ESn) einen Signalausgang (SA1 ... San) aufweist, an dem ein Ausganssignal (AS1 ... ASn) messbar ist,
**dadurch gekennzeichnet,**
**dass** die federelastische geschlossene elektrisch leitfähige Schicht die Prallfläche (PF) bildet, dass die Elektrodensegmente (ES1 ... ESn) mit einer Ladungsquelle (PP) verbunden und mittels dieser mit einer Ladespannung (L_DC) in Form einer Ladegleichspannung gegen die Prallfläche (PF) aufgeladen sind, dass die Elektrodenelemente (ES1 ... ESn) eingerichtet sind, beim Aufprall eines Teilchens (T) auf die Prallfläche (PF) durch lokale Verformung dieser in dem zumindest einen Elektrodensegment (ES1 ... ESn) eine Ladungsverschiebung zu bewirken, die ein oder mehrere das Messsignal (MS) erzeugende und/oder verändernde Impulse als das Ausgangssignal (AS1 ... ASn) erzeugt, und
**dass** die Auswerteeinheit (MCU) eingerichtet ist, eine Impulsbreite und/oder Amplitude der Impulse in dem Messsignal (MS) zu bestimmen und in Abhängigkeit von der Impulsbreite und/oder Amplitude einen Typ von Teilchen (T) zahlenmäßig zu detektieren.

2. Sensoranordnung nach Anspruch 1,
**dadurch gekennzeichnet,**
**dass** die Signalausgänge (SA1 ... SAn) der Elektrodensegmente (ES1 ... ESn) ggf. über einen Signalvorverstärker (SV1 ... SVn) mit einer Summationseinrichtung (SUE) verbunden sind, welche eingerichtet ist, die einzelnen Ausgangssignale (AS1 ... ASn) der Elektrodensegmente (ES1 ... ESn) zeitlich zueinander zu synchronisieren und die synchronisierten Ausgangssignale durch Summieren zu dem Messsignal (GS) zusammenzufassen.

3. Sensoranordnung nach Anspruch 2,
**dadurch gekennzeichnet,**
**dass** ein Ausgang der Summationseinrichtung (SUE) ggf. über einen Signalendverstärker (SEV) mit einem Analogeingang der Auswerteeinheit (MCU), wie Microcontrollereinheit, verbunden ist, die ausgebildet ist, das analoge Messsignal (GS) zu digitalisieren und auszuwerten.

4. Verfahren zum Detektieren und Zählen fester Teilchen (T), wie Körner eines Erntegutstroms, wobei eine Detektorschicht (DS) eines Sensorelementes (SE) einer Sensoranordnung (SA) Teilchen (T), die auf eine Prallfläche (PF) der Detektorschicht (DS) aufprallen, mittels eines Messsignals (GS) erfasst und eine Auswerteeinheit (VE) der Sensoranordnung (SA) dazu eingerichtet ist, die Anzahl der Teilchen (T) anhand des Messsignals (GS) zu bestimmen, wobei als Sensorelement (SE) ein solches verwendet wird, bei dem die Detektorschicht (DS) eine erste Elektrodenlage (EL1) und eine zweite Elektrodenlage (EL2) umfasst, die über eine kompressible Zwischenschicht (ZS) mechanisch fest miteinander verbunden sind, wobei die erste Elektrodenlage (EL1) eine federelastische geschlossene elektrisch leitfähige Schicht ist, wobei die zweite Elektrodenlage (EL2) eine Vielzahl elektrisch voneinander isolierte Elektrodensegmente (ES1 ... ESn) aufweist, die unterhalb der die Prallfläche (PF) bildenden ersten Elektrodenlage (EL1) angeordnet und elektrisch kapazitiv mit dieser gekoppelt sind, und wobei ein Teilchen (T) beim Aufprall auf die Prallfläche (PF) von zumindest einem der Elektrodensegmente (ES1 ... ESn) erfasst wird und das Elektrodensegment (ES1 ... ESn) ein Ausgangssignal (AS1 ... ASn) liefert,
**dadurch gekennzeichnet,**
**dass** in dem zumindest einen Elektrodensegment (ES1 ... ESn) beim Aufprall eines Teilchens (T) auf die Prallfläche (PF) durch lokale Verformung dieser eine Ladungsverschiebung erzeugt wird, die ein oder mehrere das Messsignal (MS) erzeugende und/oder verändernde Impulse als das Ausgangssignal (AS1 ... ASn) erzeugt, insbesondere kurzzeitige Spannungseinbrüche, und dass eine Impulsbreite und/oder eine Amplitude der Impulse in dem Messsignal (MS) mittels der Auswerteeinheit (MCU) bestimmt und in Abhängigkeit von der Impulsbreite und/oder Amplitude ein Typ von Teilchen (T) zahlenmäßig detektiert wird.

5. Verfahren nach Anspruch 4,
**dadurch gekennzeichnet,**
**dass** beim Aufprall eines Teilchens (T) auf den Bereich der Prallfläche direkt über einem der Elektrodensegmente (ES1 ... ESn) ein bezogen auf die Impulsbreite charakteristischer Impuls in dem Ausgangssignal (AS1 ... ASn) des Elektrodensegmentes (ES1 ... ESn) erzeugt wird und/oder dass beim Aufprall eines Teilchens (T) zwischen angrenzenden Elektrodensegmenten (ES1 ... ESn) in jedem angrenzenden Elektrodensegment (ES1 ... ESn) ein bezogen auf seine Amplitude charakteristischer Impulsanteil erzeugt wird.

6. Verfahren nach zumindest einem der Ansprüche 4 oder 5,
**dadurch gekennzeichnet,**
**dass** die Ausgangssignale (AS1 ... ASn) aller Elektrodensegmente (ES1 ... ESn) ggf. verstärkt, zeitlich zueinander synchronisiert und mittels einer Summationseinrichtung (SUE) zu dem Messsignal (MS) summiert werden, um die in angrenzenden Elektrodensegmenten (ES1 ... ESn) durch ein Teilchen (T) zeitgleich erzeugten charakteristischen Impulsanteile wieder zusammenzusetzen.

7. Verfahren nach Anspruch 6,
**dadurch gekennzeichnet,**
**dass** das von der Summationseinrichtung (SUE) in Form eines Analogsignals bereitgestellte Messsignal (MS) mittels der Auswerteeinheit (MCU), wie Mikrocontrollereinheit, sowohl zeitlich als auch in der Amplitude in Echtzeit aufgelöst und verarbeitet wird, wobei vorzugsweise das Messsignal (MS) mit einer kontinuierlichen ADC Samplerate von z.B. 1 MHz bei einer vertikalen Auflösung von z.B. 12 Bit abgetastet wird.

8. Verfahren nach zumindest einem der Ansprüche 4 bis 7,
**dadurch gekennzeichnet,**
**dass** zur Detektion eines Typs von Teilchen (T) eine Pulsbreitenmessung durchgeführt wird, wobei eine Zeitspanne ΔT zwischen dem Unterschreiten des Messsignals unter einen vorbestimmten ersten Spannungswert UTH1 und dem anschließenden Überschreiten eines vorbestimmten zweiten Spannungswertes UTH2 gemessen (mit UTH2 > UTH1) wird, wobei ein Impuls als Teilchen (T) gezählt wird, wenn die gemessene Zeitspanne ΔT einer definierten Pulsbreite, insbesondere im Bereich zwischen 10 µs bis 50 µs, entspricht, die für den charakteristischen Typ von Teilchen definiert ist, z. B. 10 µs für Rapskörner oder 50 µs für Weizenkörner und/oder dass zur Detektion eines Typs von Teilchen (T) ein lokales Minimum bzw. Maximum des Messsignals bestimmt wird, welches entsteht, wenn die Impulse von zwei oder mehreren Teilchen ineinanderlaufen, d.h. die Signalformen sich innerhalb einer Ereignisdauer zeitlich versetzt addieren.

9. Sensorelement (SE) zum Detektieren fester Teilchen (T), wie Körner eines Erntestroms, umfassend eine Detektorschicht (DS) mit einer Prallfläche (PF), wobei die Detektorschicht (DS) dazu eingerichtet ist, Teilchen (T), die auf die Prallfläche (PF) des Sensors (SE) aufprallen, mittels eines Messsignals (MS) zu erfassen, wobei die Detektorschicht (DS) eine erste Elektrodenlage (EL1) und eine zweite Elektrodenlage (EL2) umfasst, die über eine kompressible Zwischenschicht (ZS) mechanisch fest miteinander verbunden sind, wobei die erste Elektrodenlage (EL1) eine federelastische geschlossene elektrisch leitfähige Fläche ist, wobei die zweite Elektrodenlage (EL2) eine Vielzahl elektrisch voneinander isolierte Elektrodensegmente (ES1 ... ESn) aufweist, die unterhalb der die Prallfläche (PF) bildenden ersten Elektrodenlage (EL1) angeordnet und elektrisch kapazitiv mit dieser gekoppelt sind, und wobei jedes der Elektrodensegmente (ES1 ... ESn) einen Signalausgang (SA1 ... San) aufweist, an dem ein Ausganssignal (AS1 ... ASn) abgreifbar ist,
**dadurch gekennzeichnet,**
**dass** die erste Elektrodenlage (EL1) eine obere Elektrodenlage (EL1) in Form einer einzigen geschlossenen elektrisch leitfähigen Elektrode ist, deren Oberfläche die Prallfläche (PF) für die Teilchen (T) bildet, dass die obere Elektrodenlage (EL1) mit Grundpotential verbindbar ist und dass die Elektrodensegmente (ES1 ... ESn) mittels einer Ladespannung (LV) in Form einer Ladegleichspannung gegen die obere Elektrodenlage (EL1) aufladbar sind.

10. Sensorelement nach Anspruch 9,
**dadurch gekennzeichnet,**
**dass** die Detektorschicht (DS) eingerichtet ist, dass beim Aufprall eines Teilchens (T) auf die Prallfläche (PF) durch lokale Verformung dieser auf dem zumindest einen Elektrodensegment (ES1 ... ESn) eine Ladungsverschiebung erzeugt wird, die ein oder mehrere das Messsignal (MS) erzeugende und/oder verändernde Impulse, insbesondere kurzzeitige Spannungseinbrüche, erzeugt.

11. Sensorelement nach Anspruch 9,
**dadurch gekennzeichnet,**
**dass** die einzelnen Elektrodensegmente (ES1 ... ESn) über einen Widerstand (R1 ...Rn) mit einer Phantomspeisung (PP) verbindbar und mit der Ladespannung (L_DC) aufladbar sind.

12. Sensorelement nach zumindest einem der Ansprüche 9 bis 11,
**dadurch gekennzeichnet,**
**dass** die Zwischenschicht (ZS) ein homogener mit gasförmigen oder festen, mit Gas gefüllten Mikroelementen als Kompressibilitätskomponente durchsetztes Material ist, wie Klebstoff oder doppelseitige Klebeband, vorzugsweise auf der Basis von Polyurethan (PU), Polyurethan-Hartschaum (PUR), Polyethylen (PE) oder Silikon oder Bestandteilen zuvor genannter Materialien, das beidseitig mit den Elektrodenlagen (LE1, EL2) vollflächig vernetzt ist und/oder dass die Zwischenschicht (ZS) eine Schichtdicke (D_ZS) aufweist, die vorzugsweise im Bereich 50 bis 250 µm liegt und/oder vorzugsweise eine Shore-Härte (SH) aufweist, die vorzugsweise im Bereich von 15 bis 45 liegt und/oder ein Kompressionsmodul (K) aufweist, welches vorzugsweise im Bereich von <2000 kPa liegt.

13. Sensorelement nach zumindest einem der Ansprüche 9 bis 12,
**dadurch gekennzeichnet,**
**dass** die Elektrodensegmente (EL1 ... ELn) in ihrer Geometrie, insbesondere deren Form, Abmessung und/oder Parallelität, örtlich variabel ausgelegt sind und/oder dass die erste Elektrodenlage (EL1) ein E_Modul (E) im Bereich 70 GPa bis 210 GPa aufweist, vorzugsweise E = 200 GPa und/oder dass die Elektrodenlage (EL1) aus einem abriebfesten und/oder wasserdichten Material, wie Edelstahl, ausgebildet ist und/oder dass die Elektrodenlage (EL1) eine Dicke D aufweist, die in einem Bereich von 50 µm bis 250 µm liegt.

14. Sensorelement nach zumindest einem der Ansprüche 9 bis 13,
**dadurch gekennzeichnet,**
**dass** unterhalb des zweiten Elektrodenlage (EL2) eine Dämpfungslage (DL) aus einem zähplastischen massereichen Material, wie Dämpfungselemente aus dem Karosseriebau oder Karosseriedichtmasse, angeordnet, wie verklebt, ist und/oder dass die Dämpfungslage (DL) eine Dicke (D_DL) aufweist, die im Bereich ≥ 1 mm liegt.

15. Sensorelement nach zumindest einem der Ansprüche 9 bis 14,
**dadurch gekennzeichnet,**
**dass** die Elektrodensegmente (EL1 ... ELn) in Form von parallel verlaufenden streifenförmigen Elektroden, vorzugsweise in einer Kupferschicht (KS1) einer Leiterplatte (LP), ausgebildet sind, wobei die streifenförmigen Elektroden in ihrer Form, Abmessung, wie Länge und Breite, sowie Parallelität variabel ausgebildet sind.
